# EUROPÄISCHE PATENTANMELDUNG

(11) **EP 1 873 352 A1**
(43) Veröffentlichungstag der Anmeldung: **02.01.2008**
(21) Anmeldenummer: 07106906.6
(22) Anmeldetag: 25.04.2007
(51) Int. Cl.: F01C 1/22, F01C 11/00, F01C 13/00

(54) **Aufladeeinrichtung für Verbrennungskraftmaschinen**

(30) Priorität: 30.06.2006 DE 102006030796
(71) Anmelder: ROBERT BOSCH GMBH, 70442 Stuttgart (DE)
(72) Erfinder: Tafel, Stephan, 70825, Korntal-Muenchingen (DE); Rauscher, Martin, 71636, Ludwigsburg (DE); Zink, Matthias, 70182, Stuttgart (DE)

(57) **Zusammenfassung**

Die Erfindung bezieht sich auf eine Aufladeeinrichtung (10) für eine Verbrennungskraftmaschine oder für eine Brennstoffzelle mit einem Rotationskolben (12), der exzentrisch innerhalb einer Kammer (20) um eine Welle (14) rotiert. Der Rotationskolben (12) weist Rotationskolbenflächen (a, b, c) auf und bildet mit der ihn umschließenden Kammer (20) eine Expansionskammer (24) und eine Verdichterkammer (26) der Aufladeeinrichtung.

## Beschreibung

### Stand der Technik

Zur Aufladung von Verbrennungskraftmaschinen, seien es selbstzündende Verbrennungskraftmaschinen oder seien es fremdgezündete Verbrennungskraftmaschinen, werden heute Abgasturbolader eingesetzt. Bei Abgasturboladern wird die Abgasenergie, die im Abgas von Verbrennungsmotoren enthalten ist, zur Aufladung des Verbrennungsmotors genutzt. Da die Betriebscharakteristik einer Kolbenmaschine und die Betriebscharakteristik einer Strömungsmaschine, wie z. B. eines Turboladers, sehr unterschiedlich sind, steht bei geringen Drehzahlen der Verbrennungskraftmaschine oftmals nicht genügend Ladedruck zur Verfügung. Mechanische Aufladesysteme liefern den notwendigen Ladedruck bereits bei geringen Drehzahlen des Verbrennungsmotors, haben jedoch Nachteile hinsichtlich des Kraftstoffverbrauches, da die im Abgas enthaltene Energie nicht genutzt wird. Abhilfe geschaffen wurde durch Systeme, die einen mechanischen Verdichter mit einer Arbeitsmaschine koppeln, welche die Abgasenergie nutzt. Diese Systeme bauen aber im Allgemeinen auf zwei getrennten Maschinen auf, die miteinander gekoppelt werden, was Nachteile hinsichtlich der Kosten, des Gewichts und des erforderlichen Bauraums im Vergleich zu den eingangs erwähnten Turboladern darstellt.

Bei Brennstoffzellen könnte durch Aufladung bei gleicher Leistungsausbeute ein kleineres Bauvolumen erreicht werden und eine Verbesserung des Wirkungsgrades realisiert werden. Brennstoffzellen erzeugen im Allgemeinen jedoch nur geringe Abgastemperaturen. Selbst bei einer denkbaren Verbrennung des Anodenabgases, d. h. des überschüssig entweichenden Wasserstoffes, werden nur geringe Abgastemperaturen erreicht, die die Nutzung eines Turboladers nicht sinnvoll erscheinen lassen.

Aus GB 583 035 ist eine Rotationskolbenmaschine bekannt, die zwei ständig getrennte Kammern bildet. Die aus GB 583 035 bekannte Rotationskolbenmaschine ist innerhalb des Gehäuses abgedichtet, so dass kein Arbeitsmedium von der einen Kammer in die andere übertreten kann. Ein- und Auslässe können konstruktiv und fertigungstechnisch einfach auf dem Umfang des Gehäuses angeordnet werden.

### Offenbarung der Erfindung

Erfindungsgemäß wird eine Aufladeeinrichtung für eine Verbrennungskraftmaschine oder eine Brennstoffzelle vorgeschlagen, welche einen mittels einer Exzenterlagerung in einem Gehäuse gelagerten Rotationskolben aufweist, der von einem Abgasstrom angetrieben wird, wobei der Rotationskolben zugleich als Verdichter wirkt. Der Rotationskolben ist vorzugsweise scheibenförmig ausgebildet. Bei der erfindungsgemäß vorgeschlagenen Aufladeeinrichtung läuft der Rotationskolben in einer Kammer um, in der ein Bereich den Verdichterkammerteil und der andere Bereich den Expansionskammerteil darstellt. Während der Verdichterkammerteil von Frischluft durchströmt wird, wird der Expanderkammerteil von einem Abgasstrom durchströmt. Zur Beaufschlagung des Verdichterkammerteils und des Expanderkammerteils sind im Gehäuse, in dem die Kammer ausgeführt ist, in der der Rotationskolben umläuft, im Expanderkammerteil stirnseitig oder umfangsseitig jeweils eine Abgaseintrittsöffnung und eine Abgasaustrittsöffnung sowie in Bezug auf den Verdichterkammerteil jeweils eine Lufteintrittsöffnung sowie eine Luftaustrittsöffnung ausgeführt.

Der Lufteintritt und der Luftaustritt können in Bezug auf den Verdichterkammerteil z. B. tropfenförmig ausgebildet werden, wobei der Lufteintritt und der Luftaustritt bevorzugt abhängig von der Außenkontur des Rotationskolbens ausgeführt werden und derart ausgelegt sind, dass sich der Strömungsquerschnitt des Lufteintritts und des Luftaustritts in radiale Richtung in Bezug auf die vom Rotationskolben umschlossene Abtriebswelle verjüngt. In analoger Weise sind der Abgaseintritt und der Abgasaustritt ausgebildet. Die Zu- und die Abführung der Frischluft beziehungsweise des Abgases können stirnseitig oder auch umfangsseitig erfolgen, wobei der in der Kammer umlaufende Rotationskolben den Lufteintritt, den Luftaustritt sowie den Abgaseintritt und den Abgasaustritt während seiner Rotation freigibt oder verschließt. Der scheibenförmig ausgebildete Rotationskolben kann entweder als ein einzelnes Bauteil ausgebildet werden oder auch aus zwei oder mehr miteinander gefügten Rotationskolbenteilen gefertigt sein, die in einer Vertikalebene des exzentrisch gelagerten Rotationskolbens miteinander gefügt sind.

Durch die erfindungsgemäß vorgeschlagene Aufladeeinrichtung für eine Verbrennungskraftmaschine oder eine Brennstoffzellenanordnung wird in einer durch einen Kammersteg oder durch Dichtlippen geteilten Kammer eine Expansion von Abgas und simultan eine Verdichtung von Frischluft geleistet, wobei als bewegtes Bauteil lediglich ein Rotationskolben eingesetzt wird, der drei Rotationskolbenflächen aufweist. In vorteilhafter Weise sind die drei jeweils aneinandergrenzenden Rotationskolbenflächen in ihren Übergangsbereichen jeweils mit Dichtabschnitten versehen, über welche eine Abdichtung der sich ständig in Bewegung befindenden Abgas- und Frischluftvolumina gegeneinander erfolgt.

Abhängig von der gegensinnigen Durchströmung des Expanderkammerteils und des Verdichterkammerteils kann der Rotationskolben im Uhrzeigersinn rotieren oder auch entgegen des Uhrzeigersinns rotieren. Der Rotationskolben weist eine innenverzahnte Öffnung auf, über welche seine Rotationsbewegung an eine stationär ausgebildete An- oder Abtriebswelle übertragen wird.

Durch die erfindungsgemäß vorgeschlagene Aufladeeinrichtung kann bei Anwendung an Brennstoffzellen das Druckniveau des Gesamtsystems Brennstoffzelle auf ein höheres Druckniveau gebracht werden und bei Einsatz an einer Verbrennungskraftmaschine das insbesondere bei niedrigen Drehzahlen der Verbrennungskraftmaschine auftretende Turboloch vermieden werden. Ferner benötigt die erfindungsgemäß vorgeschlagene Aufladeeinrichtung im Vergleich zum Verdichterteil einer herkömmlichen Aufladeeinrichtung eine geringere Antriebsleistung.

### Zeichnung

Anhand der Zeichnung wird die Erfindung nachstehend eingehender beschrieben.

Es zeigt:
- Figurensequenz 1.1 bis 1.7: einen Umlauf des in diesem Ausführungsbeispiel entgegen dem Uhrzeigersinn innerhalb einer Kammer rotierenden Rotationskolbens der erfindungsgemäß vorgeschlagenen Aufladeeinrichtung,
- Figur 2: den Verlauf des Luftmassenstroms m₁, des Austrittsdrucks des Verdichterkammerteils p₂ sowie der Verlauf des Abgasgegendruckes p₃, jeweils aufgetragen über die Drehzahl und
- Figur 3: eine Aufladereinrichtung mit umfangsseitig am Gehäuse angeordnetem Lufteinbeziehungsweise Luftaustritt sowie Abgasein- beziehungsweise Abgasaustritt.

### Ausführungsvarianten

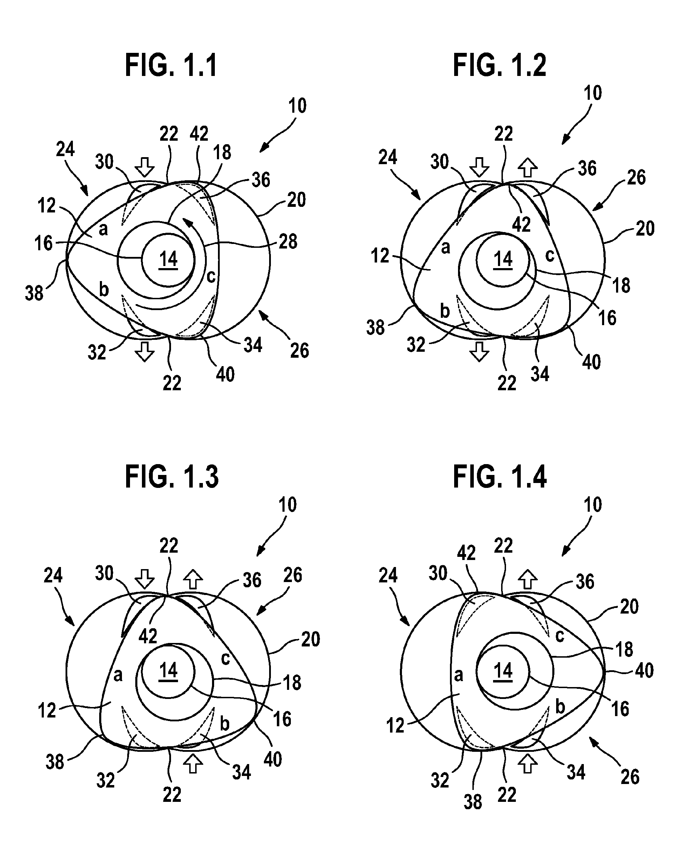

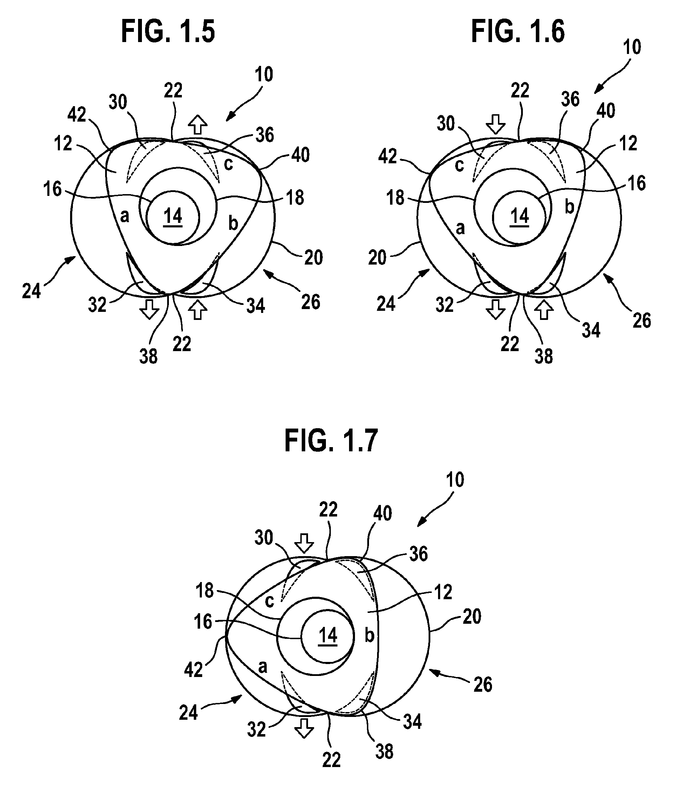

Der Figurensequenz der Figuren 1.1 bis 1.7 sind verschiedene Stadien der Bewegung des Rotationskolbens um eine stationär innerhalb einer Kammer angeordneten Abtriebswelle zu entnehmen.

Aus der Darstellung gemäß Figur 1.1 geht hervor, dass eine als Verdichter-Expander-Einheit ausgebildete Aufladeeinrichtung 10 einen Rotationskolben 12 aufweist, der entgegen des Uhrzeigersinns im Drehsinn 28 um eine stationär in einer Kammer 20 angeordnete Abtriebswelle 14 rotiert. Bevorzugt ist die An-/Abtriebswelle 14 mit einer Außenverzahnung 16 versehen. Der Rotationskolben 12 weist eine Öffnung 18 auf, an der eine mit der Außenverzahnung 16 kämmende Innenverzahnung ausgebildet ist.

Die Kammer 20, deren Geometrie im weitesten Sinne mit einer liegenden "8", d. h. einer angenäherten Trochoide, verglichen werden kann, weist einen oberen und einen unteren Kammersteg 22 auf. Die Kammerstege 22 können z. B. als separate Bauteile darstellende Dichtlippen ausgeführt sein. In vorteilhafter Weise können die beiden erwähnten Kammerstege 22 Teile des Gehäuses sein, innerhalb dessen die Kammer 20 ausgebildet ist. Die Kammer 20 umfasst einen Expansionskammerteil 24 sowie einen Verdichterkammerteil 26.

Am Expansionskammerteil 24 befindet sich ein Abgaseintritt 30 sowie ein diesem gegenüberliegender Abgasaustritt 32. Das Verdichterkammerteil 26 der Kammer 20 umfasst einen Lufteintritt 34 sowie einen diesem ebenfalls gegenüberliegenden Luftaustritt 36.

Die Strömungsquerschnitte des Abgaseintritts 30, des Abgasaustritts 32, des Lufteintritts 34 sowie des Luftaustritts 36 sind in vorteilhafter Weise entsprechend der Geometrie, d. h. der Außenkontur des Rotationskolbens, oder abhängig von den zu erreichenden Steuerzeiten ausgebildet und durch einen Querschnittsverlauf charakterisiert, der, in radialer Richtung zur An-/Abtriebswelle 14 gesehen, kontinuierlich abnimmt.

Während das Expansionskammerteil 24 vom Abgas in vertikale Richtung in Bezug auf die Zeichenebene nach unten durchströmt wird, wird das Verdichterkammerteil 26 über den Lufteintritt 34 in Richtung des Luftaustritts 36 von Frischluft durchströmt, deren Strömungsrichtung entgegengesetzt des den Expansionskammerteil 24 durchströmenden Abgasmassenstroms gerichtet ist.

Erste, zweite und dritte Rotationskolbenflächen des Rotationskolbens 12 sind durch die Buchstaben a, b und c gekennzeichnet. Zwischen den jeweiligen Rotationskolbenflächen a, b und c sind Rotationskolbendichtflächen 38, 40, 42 ausgeführt. So liegt eine erste Rotationskolbendichtfläche 38 zwischen den Rotationskolbenflächen a und b, die zweite Rotationskolbendichtfläche 40 zwischen der zweiten Rotationskolbenfläche b und der dritten Rotationskolbenfläche c sowie eine dritte Rotationskolbendichtfläche 42 zwischen den Rotationskolbenflächen c und a. Der Rotationskolben 12 kann durch ein einzelnes, scheibenförmiges Bauteil dargestellt werden; der Rotationskolben 12 kann andererseits auch aus mindestens zwei scheibenförmig ausgebildeten Komponenten bestehen, die in einer vertikalen Teilungsebene des Rotationskolbens miteinander gefügt sind. Daneben können am Rotationskolben 12 die bereits erwähnten Rotationskolbendichtflächen 38, 40, 42 ausgebildet sein oder alternativ Dichtflächen eingelassen werden, über welche der Expansionskammerteil 24 und der Verdichterkammerteil 26 während der Rotation des Rotationskolbens 12 im Drehsinn 28 gegeneinander abgedichtet werden.

In der Figurensequenz der Figuren 1.1 bis 1.7 sind gleiche Komponenten mit identischen Bezugszeichen gekennzeichnet, um die Übersicht zu erleichtern.

Aus der Darstellung gemäß Figur 1.1 geht hervor, dass der Expansionskammerteil 24 durch den offen stehenden Abgaseintritt 30 mit Abgas beaufschlagt wird. Gleichzeitig sind in dieser Rotationslage des Rotationskolbens 12 der Lufteintritt 34 und der Luftaustritt 36 durch den Rotationskolben 12 verschlossen, wohingegen der Abgasaustritt 32 im Expansionskammerteil 24 noch geöffnet steht. Dessen Öffnungsgrad entspricht dem Öffnungsgrad des Abgaseintritts 30.

Gemäß der Darstellung in Figur 1.2 hat sich der Rotationskolben 12 um die Abtriebswelle 14 im Drehsinn 28 entgegen des Uhrzeigersinns um etwa 30° gedreht. In diesem Zustand steht der Abgaseintritt 30 vollständig geöffnet, während der Abgasaustritt 32 kurz vor dem Schließen ist. In diesem Zustand überdeckt der Rotationskolben 12 den Lufteintritt 34 vollständig, wohingegen der Luftaustritt 36 aus dem Verdichterkammerteil 26 vollständig geöffnet steht, so dass die im Verdichterkammerteil 26 komprimierte Luft über den Luftaustritt 36 aus dem Verdichterkammerteil 26 entweichen kann.

Aus der Darstellung gemäß Figur 1.3 geht hervor, dass eine dritte Rotationskolbendichtfläche 42 des Rotationskolbens 12, die zwischen der ersten Rotationskolbenfläche a und der dritten Rotationskolbenfläche c liegt, gerade vor dem Abgaseintritt 30 liegt, dieser demzufolge vollständig geöffnet ist, während die dritte Rotationskolbenfläche c gerade - im Drehsinn 28 des Rotationskolbens 12 gesehen - den Luftaustritt 36 freigibt. Demzufolge tritt in dem in Figur 1.3 dargestellten Zustand Abgas über den Abgaseintritt 30 in den Expansionskammerteil 24 der Kammer 20 ein, dessen Abgasaustritt 32 durch den Rotationskolben 12 verschlossen ist, und verdichtete Luft aus dem Verdichterkammerteil 26 über den Luftaustritt 36 aus. Die Strömungsrichtungen des Abgases in den Abgaseintritt 30 und aus dem Luftaustritt 36 verlaufen zueinander entgegengesetzt. Der Darstellung gemäß Figur 1.3 ist entnehmbar, dass die dritte Rotationskolbendichtfläche 42 gerade den oberen Kammersteg 22 passiert hat und - zwischen Abgaseintritt 30 und Luftaustritt 36 liegend - den Verdichterkammerteil 26 vom Expansionskammerteil 24 der Kammer 20 trennt. Im in Figur 1.3 dargestellten Zustand ist der Expansionskammerteil 24 durch die erste Rotationskolbendichtfläche 38 verschlossen, so dass das über den geöffneten Abgaseintritt 30 in den Expansionskammerteil 24 einströmende Abgas in diesem verbleibt. Über den gerade öffnenden Lufteintritt 34 strömt Luft in die von der zweiten Rotationskolbenfläche b und der Wand der Kammer 20 begrenzte Verdichterkammer 26 ein, aus der wiederum durch die dritte Rotationskolbenftäche c verdichtete Luft über den Luftaustritt 36 aus dem Verdichterkammerteil 26 ausgeschoben wird. Während der Rotationsbewegung des Rotationskolbens 12 entgegen des Uhrzeigersinns im Drehsinn 28 kämmt die an der Öffnung 18 ausgebildete Innenverzahnung 18 mit der Außenverzahnung 16 der Abtriebswelle 14.

In der Darstellung gemäß Figur 1.4 sind durch die Fläche des scheibenförmig ausgebildeten Rotationskolbens 12 sowohl der Abgaseintritt 30 als auch der Abgasaustritt 32 des Expansionskammerteils 24 der Kammer 20 geschlossen. Die erste Rotationskolbenftäche a des Rotationskolbens 12 steht nahezu hochkant. Während der Abgaseintritt 30 und der Abgasaustritt 32 des Expansionskammerteils 24 verschlossen sind, strömt über den sich im Vergleich zur Darstellung gemäß Figur 1.3 weiter öffnenden Lufteintritt 34 Luft in den Verdichterkammerteil 26 unterhalb der zweiten Rotationskolbenftäche b ein, während gleichzeitig verdichtete Luft aus dem Verdichterkammerteil 26 über die dritte Rotationskolbenftäche c in den Luftaustritt 36 ausgeschoben wird. In dem in Figur 1.4 dargestellten Zustand dichtet die zweite Rotationskolbendichtfläche 40 zwischen der zweiten Rotationskolbenfläche b und der dritten Rotationskolbenftäche c den Teil des Verdichterkammerteils 26, in den über den Lufteintritt 34 Frischluft nachströmt, gegen den Teil der Verdichterkammer 26 ab, aus welchem verdichtete Luft über die dritte Rotationskolbenfläche c in den Luftaustritt 36 geschoben wird.

Der Darstellung gemäß Figur 1.5 ist entnehmbar, dass der Rotationskolben 12 in der in Figur 1.5 dargestellten Drehposition den Lufteintritt 34 vollständig freigibt, so dass über diesen Frischluft in den Teil des Verdichterkammerteils 26 einströmt, der von der Wand der Kammer 20 und der zweiten Rotationskolbenfläche b begrenzt ist. Demgegenüber ist die verdichtete Luft über den nunmehr fast geschlossenen Luftaustritt 36 aus dem von der Wand der Kammer 20 und der dritten Rotationskolbenfläche c begrenzten Teil des Verdichterkammerteils 26 fast vollständig ausgeschoben. In der in Figur 1.5 dargestellten Rotationslage des Rotationskolbens 12 steht der Abgaseintritt 30 geschlossen, wohingegen der Abgasaustritt 32, der dem Abgaseintritt 30 gegenüberliegt, vollständig geöffnet ist.

In der in Figur 1.5 dargestellten Drehlage des Rotationskolbens 12 liegt die erste Rotationskolbendichtfläche 38 oberhalb des unteren Kammerstegs 22 der Kammer 20 und dichtet einerseits den Abgasaustritt 32 und den geöffnet stehenden Lufteintritt 34 gegeneinander ab und andererseits den Expansionskammerteil 24 gegen den Verdichterkammerteil 26. In der in Figur 1.5 dargestellten Drehlage des Rotationskolbens 12 ist der Abgaseintritt 30 vollständig geschlossen, wohingegen der Abgasaustritt 32 vollständig offen steht. Der Lufteintritt 34 ist ebenfalls vollständig geöffnet und ist über den unteren Kammersteg 22, der mit der ersten Rotationskolbendichtfläche 38 zusammenwirkt, vom Expansionskammerteil 24 getrennt.

Figur 1.6 zeigt, dass der Rotationskolben 12 nunmehr bei seiner exzentrischen Bewegung um die Abtriebswelle 14 beginnt, mit seiner ersten Rotationskolbendichtfläche 38 und der zweiten Rotationskolbenfläche b den Lufteintritt 34 kontinuierlich zu verschließen. Während der Luftaustritt 36 des Verdichterkammerteils 26 durch den Rotationskolben 12 geschlossen ist, öffnet der Abgaseintritt 30, so dass über diesen einströmendes Abgas den Rotationskolben 12 durch Einwirken auf die dritte Rotationskolbenfläche c treibt. Gleichzeitig verlässt das Abgas, welches im Raum zwischen der ersten Rotationskolbenfläche a und der Wand der Kammer 20 im Expansionskammerteil 24 eingeschlossen ist, über den in der Darstellung gemäß Figur 1.6 geöffneten Abgasaustritt 32 den Expansionskammerteil 24.

In der Darstellung gemäß Figur 1.7 ist dargestellt, dass dieser bei Drehlage des Rotationskolbens 12 durch diesen sowohl der Lufteintritt 34 als auch der Luftaustritt 36 vollständig geschlossen sind, während der Abgaseintritt 30 und der Abgasaustritt 32 jeweils teilweise geschlossen sind. Gleichzeitig befindet sich die zweite Rotationskolbendichtfläche 42 in einer Position, in der sie das über den Abgaseintritt 30 einströmende und auf die dritte Rotationskolbenfläche c wirkende Abgas vom Abgas trennt, welches den Raum zwischen der Wand der Kammer 20 sowie der ersten Rotationskolbenfläche a ausfüllt, über den Abgasaustritt 32 den Expansionskammerteil 24 verlässt.

Die in der Figurensequenz der Figuren 1.1 bis 1.7 dargestellte Aufladeeinrichtung 10 umfasst einen scheibenförmig ausgebildeten Rotationskolben 12, der in der Kammer 20 rotiert. Durch die Rotationskolbenflächen a, b und c werden während der Bewegung des Rotationskolbens 12 entgegen des Uhrzeigersinns im Drehsinn 28 jeweils Volumina gebildet, die vom Abgas und von Frischluft in gegensinniger Strömungsrichtung durchströmt werden. Die Kammer 20 bildet mit dem Rotationskolben 12 jeweils den Expansionskammerteil 24 sowie den Verdichterkammerteil 26, die entsprechend der Drehlage des Rotationskolbens 12 durch die Rotationskolbendichtflächen 38, 40, 42 und die Kammerstege 22, die in der Wand der Kammer 20 in einem Gehäuse ausgebildet sind, gegeneinander abgedichtet sind.

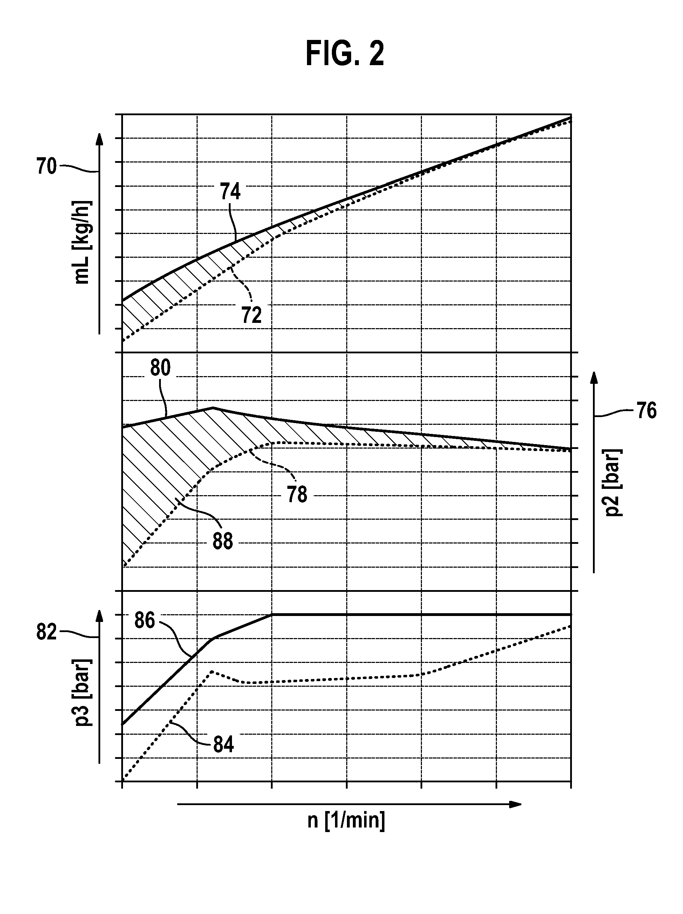

Der Darstellung gemäß Figur 2 sind jeweils Luftmassenströme, Austrittsdrücke am Verdichterkammerteil sowie ein weiterer Druckverlauf für einen herkömmlichen Abgasturbolader sowie eine erfindungsgemäße Aufladereinrichtung beispielsweise mit einem Übersetzungsverhältnis von i = 2, aufgetragen über die Drehzahl, einander gegenübergestellt.

Aus einem Vergleich des durch Bezugszeichen 70 gekennzeichneten Luftmassenstromverlaufs geht hervor, dass durch einen herkömmlichen Abgasturbolader ein Luftmassenstrom gemäß der Kurve 72 in kg/h gefördert wird. Demgegenüber repräsentiert die durch Bezugszeichen 74 gekennzeichnete Kurve den durch eine erfindungsgemäße Aufladeeinrichtung 10 geförderten Luftmassenstrom
bei einem Übersetzungsverhältnis der Verdichter-Expander-Einheit 10 von z. B. i = 2. Der mittels der erfindungsgemäßen Aufladereinrichtung 10 geförderte Luftmassenstrom nähert sich für höhere Drehzahlen ab 2000 min⁻¹ dem von einem herkömmlichen Abgasturbolader geförderten Luftmassenstrom an. Hinsichtlich des an der Verdichteraustrittsseite erzeugten Drucks p₂, vergleiche Bezugszeichen 76 in Figur 2, sind die Austrittsdruckverläufe 78 und 80 im mittleren Teil der Figur 2 dargestellt. Es ergibt sich, dass bei niedrigen Drehzahlen an einem Abgasturbolader bis etwa 1500 min⁻¹ das Turboloch auftritt und dieerfindungsgemäße Aufladeeinrichtung 10 im niedrigen Drehzahlbereich einen signifikanten Ladedruckvorteil 88 bewirkt, gekennzeichnet durch den Druckverlauf 80 des Druckes p₂ für die Verdichter-Expander-Einheit 10. Im Betriebsbereich geringer Drehzahlen, so etwa unter 2000 min⁻¹, lässt sich mit der erfindungsgemäß vorgeschlagenen als Aufladeeinrichtung eingesetzten Verdichter-Expander-Einheit 10 ein signifikant besserer Ladedruck p₂, verglichen mit dem durch einen Abgasturbolader im niedrigen Drehzahlbereich erzielten Ladedruck p₂, erreichen.

In der Figur 2 ist darüber hinaus der Verlauf 82 des Abgasgegendruckes p₃, der sich auf der Auslassseite einer Verbrennungskraftmaschine vor dem Eintritt in den Expansionskammerteil 24 einstellt, dargestellt. Die Druckverläufe für den Abgasgegendruck p₃ sind durch die Kurve 84 für einen herkömmlichen Abgasturbolader und durch die Kurve 86 für die erfindungsgemäße Verdichter-Expander-Einheit 10, jeweils aufgetragen über die Drehzahl, einander gegenübergestellt. In Bezug auf eine Verbrennungskraftmaschine verschlechtert ein höherer Abgasgegendruck, vergleiche Kurve 86, bei Einsatz einer erfindungsgemäßen Aufladeeinrichrtung 10 zwar die von der Verbrennungskraftmaschine zu verrichtende Ladungswechselarbeit, ist jedoch günstig für die von der Aufladeeinrichtung 10 zu leistende Expansionsarbeit.

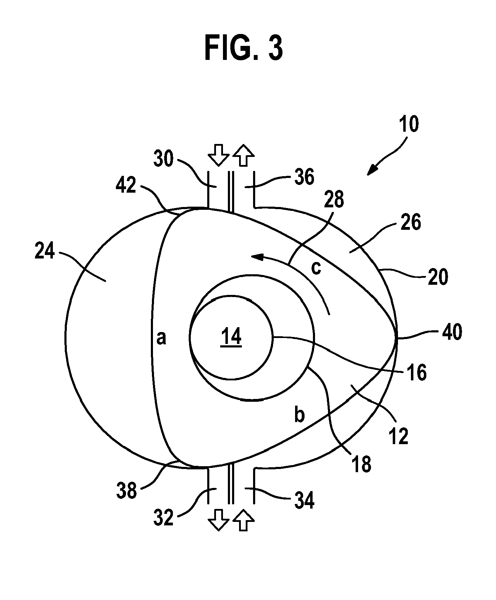

Der Darstellung gemäß Figur 3 ist die erfindungsgemäß vorgeschlagene, als Aufladeeinrichtung für Verbrennungskraftmaschinen oder Brennstoffzellensysteme einsetzbare Verdichter-Expander-Einheit mit umfangsseitig angebrachten Ein- beziehungsweise Austrittsquerschnitten für Luft und Abgas dargestellt.

Aus der Darstellung gemäß Figur 3 ist entnehmbar, dass im Gegensatz zur Figurensequenz der Figuren 1.1 bis 1.7 der Abgaseintritt 30, der Abgasaustritt 32, der Lufteintritt 34 sowie der Luftaustritt 36 nicht stirnseitig in Bezug auf den Rotationskolben 12 angeordnet sind, sondern senkrecht zur Rotationsachse des exzentrisch gelagerten Rotationskolbens 12 im Gehäuse der Kammer 20 verlaufen. Analog zur Darstellung gemäß der Figurensequenz der Figuren 1.1 bis 1.7 strömt das Abgas durch den mindestens einen Abgaseintritt 30 und den mindestens einen Abgasaustritt 32 gegensinnig zur Luftströmung, die über den mindestens einen Lufteintritt 34 in den Verdichterkammerteil 26 eintritt und aus diesem über den mindestens einen Luftaustritt 36 wieder austritt. Der Rotationskolben 12 umfasst auch gemäß dieser Ausführungsvariante die erste Rotationskolbenfläche a, die zweite Rotationskolbenfläche b sowie die dritte Rotationskolbenfläche c. Der Expansionskammerteil 24 und der Verdichterkammerteil 26 können auch gemäß der in Figur 3 dargestellten Ausführungsvariante durch die Rotationskolbendichtflächen 38, 40 beziehungsweise 42 gegeneinander abgedichtet sein. Alternativ besteht auch die Möglichkeit, an der Außenkontur des Rotationskolbens 12, der im Drehsinn 28 entgegen des Uhrzeigersinns exzentrisch gelagert in der Kammer 20 rotiert, Dichtflächen oder Dichtleisten als Dichtflächen 38, 40 beziehungsweise 42 auszubilden. Wenngleich in den Ausführungsvarianten gemäß der Figuren 1.1 bis 1.7 beziehungsweise gemäß Figur 3 einflutig ausgebildet, können der Abgaseintritt 30, der Abgasaustritt 32, der Lufteintritt 34 sowie der Luftaustritt 36 auch zwei- oder mehrflutig ausgeführt werden, d. h. mehrere Ein- beziehungsweise Austrittsöffnungen, seien sie stirnseitig im Gehäuse der Kammer 20 angeordnet, seien sie umfangsseitig am Gehäuse, welches die Kammer aufnimmt, angeordnet, ausgebildet werden.

## Patentansprüche

1. Aufladeeinrichtung (10) für eine Verbrennungskraftmaschine oder für eine Brennstoffzelle mit einem Rotationskolben (12), der exzentrisch innerhalb einer Kammer (20) um eine Welle (14) rotiert und der Rotationskolbenflächen (a, b, c) aufweist, wobei der Rotationskolben (12) mit der diesen umschließenden Kammer (20) eine Expansionskammer (24) und eine Verdichterkammer (26) der Aufladeeinrichtung bildet.

2. Aufladeeinrichtung gemäß Anspruch 1, **dadurch gekennzeichnet, dass** die Expansionskammer (24) mindestens einen Abgaseintritt (30) und mindestens einen Abgasaustritt (32) aufweist, die im Wesentlichen - bezogen auf die Expansionskammer (24) - einander gegenüberliegen.

3. Aufladeeinrichtung gemäß Anspruch 1, **dadurch gekennzeichnet, dass** die Verdichterkammer (26) mindestens einen Lufteintritt (34) und mindestens einen Luftaustritt (36) umfasst, die im Wesentlichen - bezogen auf die Verdichterkammer (26) - einander gegenüberliegen.

4. Aufladeeinrichtung gemäß Anspruch 1, **dadurch gekennzeichnet, dass** die Expansionskammer (24) von Abgas in einer Strömungsrichtung durchströmt ist, die entgegengesetzt zur Strömungsrichtung der die Verdichterkammer (26) durchströmenden Frischluft verläuft.

5. Aufladeeinrichtung gemäß der Ansprüche 2 und 3, **dadurch gekennzeichnet, dass** die Strömungsquerschnitte des Abgasein- und des Abgasaustritts (30, 32) und die des Luftein- und des Luftaustritts (34, 36) abhängig von der Außenkontur des Rotationskolbens (12) ausgebildet sind.

6. Aufladeeinrichtung gemäß Anspruch 1, **dadurch gekennzeichnet, dass** die Kammer (20) zwei in der Wand der Kammer (20) ausgebildete Kammerstege (22) oder Dichtlippen aufweist.

7. Aufladeeinrichtung gemäß Anspruch 1, **dadurch gekennzeichnet, dass** der Rotationskolben (12) als scheibenförmiges Bauteil ausgebildet ist, welches in der Kammer (20) umläuft.

8. Aufladeeinrichtung gemäß der Ansprüche 2 und 3, **dadurch gekennzeichnet, dass** der mindestens eine Abgasein- und der mindestens eine Abgasaustritt (30, 32) sowie der mindestens eine Luftein- und der mindestens eine Luftaustritt (34, 36) an Stirnseiten der Kammer (20) ausgebildet sind.

9. Aufladeeinrichtung gemäß der Ansprüche 2 und 3, **dadurch gekennzeichnet, dass** der mindestens eine Abgasein- und der mindestens eine Abgasaustritt (30, 32) sowie der mindestens eine Luftein- und der mindestens eine Luftaustritt (34, 36) umfangsseitig an der Kammer (20) ausgebildet sind.

10. Aufladeeinrichtung gemäß Anspruch 1, **dadurch gekennzeichnet, dass** Übergänge (38, 40, 42) zwischen den Rotationskolbenflächen (a, b, c) als umlaufende Dichtbereiche zwischen der Expansionskammer (24) und der Verdichterkammer (26) ausgeführt sind.
